# EUROPÄISCHE PATENTANMELDUNG

(11) **EP 1 191 486 A1**
(43) Veröffentlichungstag der Anmeldung: **27.03.2002**
(21) Anmeldenummer: 01122265.0
(22) Anmeldetag: 18.09.2001
(51) Int. Cl.: G07C 9/00, B60R 25/00

(54) **Informationsträger**

(30) Priorität: 21.09.2000 DE 10046699
(71) Anmelder: ROBERT BOSCH GMBH, 70442 Stuttgart (DE)
(72) Erfinder: Mathony, Hans-Joerg, Dr., 71732 Tamm-Hohenstange (DE); Ries-Mueller, Klaus, 74906 Bad Rappenau (DE)

(57) **Zusammenfassung**

Zur Erweiterung der Funktionalität eines Informationsträgers (2) mit mindestens einem Mikroprozessor und mindestens einer Speichereinheit, wird vorgeschlagen, in der Speichereinheit mindestens einen benutzerspezifischen Datensatz zur automatischen Einstellung einzelner Fahrzeugkomponenten entsprechend den individuellen Anforderungen des Benutzers abzuspeichern. Der erfindungsgemäße Informationsträger (2) ist so konfiguriert, dass er mit der Elektronik eines Kraftfahrzeugs kommunizieren kann.

## Beschreibung

### Stand der Technik

Die Erfindung betrifft einen Informationsträger mit mindestens einem Mikroprozessor und mindestens einer Speichereinheit, wobei der Informationsträger so konfiguriert ist, dass er mit der Elektronik eines Kraftfahrzeugs kommunizieren kann.

Aus der Praxis sind unter der Bezeichnung "keyless-go" Fahrzeugzugangs- und Fahrberechtigungssysteme bekannt, bei denen die Zugriffsberechtigung mit Hilfe eines Informationsträgers in Form einer Smart Card geprüft wird. Zum Nachweis der Zugriffsberechtigung sendet die Smart Card ein Identifikationssignal aus, das von der Elektronik des Kraftfahrzeugs empfangen und geprüft wird. Nur wenn diese Prüfung des Identifikationssignals positiv verläuft, die Smart Card also von der Elektronik des Kraftfahrzeugs identifiziert wird, wird der Zugriff auf bestimmte Fahrzeugkomponenten freigegeben, so dass sich beispielsweise die Fahrzeugtür öffnen lässt oder der Motor starten lässt.

Die bekannten Smart Cards enthalten keine benutzerspezifischen Daten. Im Rahmen der bekannten Fahrzeugzugangs- und Fahrberechtigungssysteme wird ausschließlich geprüft, ob es sich bei der sendenden Smart Card um die zum Fahrzeug gehörige Smart Card handelt. Außerdem ist die Sendereichweite derartiger Smart Cards typischerweise sehr gering, so dass eine Signalübertragung zwischen der Smart Card und dem Fahrzeug in der Regel nur in unmittelbarer Nähe des Fahrzeugs möglich ist.

### Vorteile der Erfindung

Mit der vorliegenden Erfindung wird ein Informationsträger vorgeschlagen, dessen Funktionalität gegenüber den bekannten Informationsträgern der eingangs genannten Art erweitert ist.

Dies wird erfindungsgemäß erreicht, indem in der Speichereinheit des Informationsträgers mindestens ein benutzerspezifischer Datensatz zur automatischen Einstellung einzelner Fahrzeugkomponenten entsprechend den individuellen Anforderungen des Benutzers abspeicherbar ist.

Viele Fahrzeugkomponenten, wie z. B. die Sitze, die Rückspiegel, etc., sind individuell auf den Fahrer oder Beifahrer einstellbar und sollten auch entsprechend eingestellt werden, um optimal genutzt werden zu können. Wird ein Fahrzeug regelmäßig von mehreren Personen benutzt, so müssen in der Regel bei jedem Fahrerwechsel sämtliche Einstellungen der Fahrzeugkomponenten an den jeweiligen Benutzer angepasst werden. Diese Anpassung ist relativ aufwendig und wird daher oftmals nicht mit hinreichender Sorgfalt und nicht bei allen betroffenen Fahrzeugkomponenten ausgeführt. Erfindungsgemäß ist erkannt worden, dass die individuelle Einstellung der Fahrzeugkomponenten auch automatisch erfolgen kann, wenn entsprechende Benutzerkonfigurationen zur Verfügung stehen. Deshalb wird erfindungsgemäß vorgeschlagen, in der Speichereinheit eines ohnehin für die Benutzung des Kraftfahrzeugs erforderlichen Informationsträgers einen benutzerspezifischen Datensatz zur Einstellung der einzelnen Fahrzeugkomponenten abzuspeichern. Dieser Datensatz kann dann, beispielsweise bei der Prüfung der Zugriffsberechtigung, automatisch eingelesen und durch entsprechende Einstellung der Fahrzeugkomponenten umgesetzt werden.

Wie bereits erwähnt, ist die Speichereinheit des erfindungsgemäßen Informationsträgers beschreibbar. In einer vorteilhaften Variante sind in der Speichereinheit mehrere benutzerspezifische Datensätze zur automatischen Einstellung einer Fahrzeugkomponente abspeicherbar und wahlweise abrufbar, so dass der Benutzer wählen kann, welcher Datensatz der automatischen Einstellung zu Grunde gelegt werden soll. Auf diese Weise lassen sich automatisch verschiedene Einstellungskonfigurationen für einen Benutzer realisieren oder auch verschiedene Einstellungskonfigurationen für verschiedene Benutzer.

Von besonderem Vorteil ist es, wenn in der Speichereinheit mindestens ein benutzerspezifischer Datensatz zur automatischen Konfiguration eines im Fahrzeug befindlichen Displays abspeicherbar ist.

An Stelle der herkömmlichen Kombiinstrumente werden In Kraftfahrzeugen immer mehr LCD- und TFT-Displays eingesetzt. Für GPS-Systeme und Navigationssysteme sind derartige Displays bereits Standard. Dabei sollen nicht nur für den Fahrer sondern auch für den oder die Beifahrer Displays zur Verfügung stehen. Durch entsprechende Konfiguration der Displays kann eine übersichtlichere und verbesserte Darstellung der für den jeweiligen Benutzer wesentlichen Inhalte erreicht werden. Dazu können beispielsweise der Inhalt, der Darstellbereich, die Aufteilung, die Farbe oder die Auflösung des Displays in Abhängigkeit vom Benutzer bzw. Benutzerprofil verändert werden.

So kann beispielsweise beim Starten des Kraftfahrzeugs eine auf dem erfindungsgemäßen Informationsträger abgespeicherte benutzerspezifische Display-Konfiguration eingelesen und auf die betroffenen Displays übertragen werden. Einem sportlichen Fahrertyp könnte auf diese Weise ein Drehzahlmesser angezeigt werden, während einem ökonomischen Fahrertyp der Kraftstoffverbrauch angezeigt werden könnte. Auch die Auflösung der Geschwindigkeitsanzeige könnte in Abhängigkeit vom Fahrertyp variiert werden. Daneben ist es auch möglich, benutzerspezifische Empfehlungen auf dem Display anzuzeigen. So könnte beispielsweise ein sportlicher Fahrer Empfehlungen für einen ökonomischeren Fahrstil erhalten. Bei mehreren Displays kann eine Anpassung in Abhängigkeit vom Sitzplatz erfolgen. Das Display des Beifahrers kann dann anders konfiguriert werden als das Display des Fahrers. Besonders vorteilhaft ist es, wenn der Benutzer mehrere Display-Konfigurationen erstellen kann, wie z.B. bei Windows-PCs üblich, und diese Display-Konfigurationen auf dem erfindungsgemäßen Informationsträger abspeichern kann, um sie wahlweise abzurufen.

An dieser Stelle sei angemerkt, dass Informationen über den Benutzer bzw. ein Benutzerprofil auch auf andere Weise gewonnen werden könnten, beispielsweise durch Erfassung derartiger Informationen von Steuergeräten im Kraftfahrzeug, wie dem Motormanagement oder der Getriebesteuerung. Verfügt die Getriebesteuerung über eine Fahrertyperkennung, so kann der Fahrer aus seinem Fahrverhalten als sportlich oder eher als ökonomisch klassifiziert werden. Dazu wird im wesentlichen die Betätigung und Dynamik des Gaspedals ausgewertet.

Es erweist sich als vorteilhaft, wenn der erfindungsgemäße Informationsträger über eine Funkverbindung mit der Elektronik eines Kraftfahrzeugs kommunizieren kann. Der Benutzer muß den Informationsträger dann nicht wie einen Schlüssel in eine Leseeinrichtung am Kraftfahrzeug einführen sondern kann den Informationsträger immer an derselben Stelle bei sich tragen, was das Risiko, den Informationsträger zu verlegen oder zu verlieren, minimiert. Da der Informationsträger in diesem Fall - wie voranstehend erwähnt - auch nicht in eine Leseeinrichtung eingeführt werden muß, wird auch eine mechanische Beanspruchung des Informationsträgers minimiert.

In einer besonders vorteilhaften Variante des erfindungsgemäßen Informationsträgers ist der Mikroprozessor so programmiert ist, dass sich eine Kommunikationsverbindung zwischen einer Mobilfunkeinheit mit Leseschacht für den Informationsträger und der Elektronik des Kraftfahrzeugs aufbauen lässt, wobei die Zugriffsberechtigung für einzelne Fahrzeugkomponenten von der Elektronik des Kraftfahrzeugs geprüft wird. Der erfindungsgemäße Informationsträger wird in diesem Fall also zur Überprüfung der Zugriffsberechtigung eingesetzt und ermöglicht so einen autorisierten Fernzugriff auf Elektronikfunktionen eines Kraftfahrzeugs, beispielsweise zur Fernabfrage von Statusinformationen für Diagnosezwecke oder zur Fernbedienung bzw. Fernsteuerung einzelner Fahrzeugkomponenten, wie der Türverriegelung oder den Fensterhebern. Die aus der Praxis bekannten Konzepte, die auf einer Signalübertragung auf Infrarotbasis beruhen, ermöglichen lediglich in der unmittelbaren Umgebung des Kraftfahrzeugs einen Fernzugriff auf ausgewählte Fahrzeugkomponenten, wie z.B. die Türverriegelung. Da der Fernzugriff mit Hilfe des erfindungsgemäßen Informationsträger über eine Funkverbindung erfolgt, können Fernabfragen und Fernsteuerung auch über große Distanzen erfolgen.

Als Mobilfunkeinheit kann in diesem Zusammenhang ein einfaches Mobiltelefon mit entsprechendem Leseschacht für den Informationsträger verwendet werden. Von Vorteil, insbesondere bei der Fernabfrage von Statusinformationen, erweist es sich, wenn das Mobiltelefon über ein relativ großes und ggf. auch farbiges Display zur Darstellung der Statusinformationen verfügt.

Das voranstehend beschriebene Konzept für den Einsatz eines erfindungsgemäßen Informationsträgers kombiniert ein Zugangs- und Fahrberechtigungssystem, bei dem die Zugriffsberechtigung mit Hilfe des Informationsträgers geprüft wird, mit einer Mobilfunkeinheit, die über einen entsprechenden Leseschacht für den Informationsträger verfügt, so dass eine bidirektionale Kommunikation zwischen der Elektronik des Kraftfahrzeugs und der Mobilfunkeinheit über die bekannte GSM-Technik stattfinden kann, wenn der Zugriff auf einzelne Fahrzeugkomponenten nach Prüfung der Zugriffsberechtigung freigegeben worden ist. Auf diese Weise können dann neben Statusinformationen auch Bedien- und Verstellmenues über eine GSM-Verbindung in die Mobilfunkeinheit geladen werden.

Zur Überprüfung der Zugriffsberechtigung könnte der Mikroprozessor des erfindungsgemäßen Informationsträgers so programmiert sein, dass der Aufbau der Kommunikationsverbindung zwischen der Mobilfunkeinheit und der Elektronik des Kraftfahrzeugs nach dem Challenge/Response-Verfahren erfolgt. In diesem Fall wird ein Challenge-Codewort vom Fahrzeug an die Mobilfunkeinheit gesendet. Diese leitet das Codewort an den Informationsträger im entsprechenden Leseschacht weiter. Der Informationsträger berechnet dann den zum Codewort gehörigen Identifikationscode, der von der Mobilfunkeinheit über GSM als Response an das Fahrzeug zurückgesendet wird. Wenn der vom Informationsträger berechnete Response mit dem vom Fahrzeug parallel berechneten Response übereinstimmt, wird der Zugriff freigegeben.

Bei dem erfindungsgemäßen Informationsträger kann es sich um einen herkömmlichen Schlüssel mit Speichereinheit, Mikroprozessor und ggf. Challenge/Response Transpondersystem handeln, das für die Überprüfung der Zugriffsberechtigung genutzt wird. Dazu müsste lediglich eine Transponder-Base-Station, entsprechend der Fahrzeug-Wegfahrsperre, in die Mobilfunkeinheit integriert werden. Die Mobilfunkeinheit würde in diesem Falle im Rahmen des Aufbaus der Verbindung zur Elektronik des Kraftfahrzeugs mit dem Schlüssel kommunizieren, ähnlich wie die Wegfahrsperre im Kraftfahrzeug.

Alternativ dazu kann der erfindungsgemäße Informationsträger auch in Form einer Smart Card realisiert sein. In diesem Fall sollte die Mobilfunkeinheit mit einem Smart Card Leseschacht ausgestattet sein.

### Zeichnung

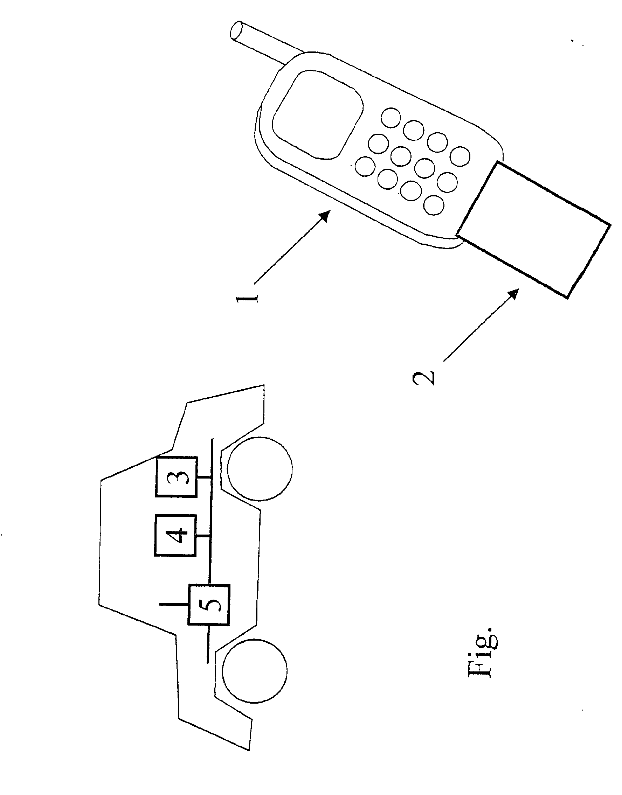

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt den schematischen Aufbau einer Einrichtung zum autorisierten Fernzugriff auf einzelne Fahrzeugkomponenten unter Verwendung eines erfindungsgemäßen Informationsträgers.

### Beschreibung des Ausführungsbeispiels

Der Fernzugriff auf einzelne Fahrzeugkomponenten erfolgt bei dem in der einzigen Figur dargestellten Ausführungsbeispiel mit Hilfe eines Mobilfunkgeräts 1 mit Display und Tastatur. Das Mobilfunkgerät 1 verfügt außerdem über einen Leseschacht für einen Informationsträger 2, der im vorliegenden Fall in Form einer Smart Card realisiert ist.

Die Smart Card 2 umfasst einen Mikroprozessor und eine Speichereinheit und ist so konfiguriert, dass sie mit der Elektronik eines Kraftfahrzeugs kommunizieren kann, und zwar auch unabhängig von einem Mobilfunkgerät. Die Smart Card 2 des hier beschriebenen Ausführungsbeispiels dient zur Prüfung der Zugriffsberechtigung in unmittelbarer Umgebung des Kraftfahrzeugs. Dazu sendet die Smart Card 2 ein Identifikationssignal aus, das von der Elektronik des Kraftfahrzeugs empfangen und geprüft wird. Nur wenn diese Prüfung des Identifikationssignals positiv verläuft, die Smart Card 2 also von der Elektronik des Kraftfahrzeugs identifiziert wird, wird der Zugriff auf bestimmte Fahrzeugkomponenten freigegeben, so dass sich beispielsweise die Fahrzeugtür öffnen lässt oder der Motor starten lässt. Außerdem ist in der Speichereinheit der Smart Card 2 ein benutzerspezifischer Datensatz zur automatischen Einstellung einzelner Fahrzeugkomponenten entsprechend den individuellen Anforderungen des Benutzers abgespeichert. Insbesondere können so die im Kraftfahrzeug befindlichen Displays automatisch benutzerspezifisch konfiguriert werden.

Die Elektronik des Kraftfahrzeugs umfasst eine GSM-Einheit 3 für die Kommunikation mit dem Mobilfunkgerät 1. Desweiteren ist eine Passive Entry Base Station 4 zur Überprüfung der Zugriffsberechtigung eines "Anrufers", d.h. der Zugriffsberechtigung über das Mobilfunkgerät, vorgesehen. Hierfür wird von der Passive Entry Base Station 4 ein Challenge-Codewort an das Mobilfunkgerät 1 gesendet. Dieses leitet das Codewort an die in den Leseschacht eingeführte Smart Card 2 weiter. Die Smart Card 2 berechnet dann den zum Codewort gehörigen Identifikationscode, der vom Mobilfunkgerät 1 über GSM als Response an die Passive Entry Base Station 4 zurückgesendet wird. Wenn der von der Smart Card 2 berechnete Response mit dem von der Passive Entry Base Station 4 parallel berechneten Response übereinstimmt, wird der Zugriff für das Mobilfunkgerät 1 freigegeben. Der "Anrufer" kann dann über ein Gateway-SG 5 auf verschiedene Fahrzeugkomponenten zugreifen, wie z.B. auf Steuergeräte am Antriebsstrang, auf den Karosseriebus, etc..

Im hier beschriebenen Ausführungsbeispiel dient die Smart Card 2 also nicht nur zur Überprüfung der Zugriffsberechtigung in unmittelbarer Umgebung des Kraftfahrzeugs sondern auch bei Zugriff auf einzelne Fahrzeugkomponenten per Mobilfunkgerät 1.

## Patentansprüche

1. Informationsträger (2) mit mindestens einem Mikroprozessor und mindestens einer Speichereinheit, wobei der Informationsträger (2) so konfiguriert ist, dass er mit der Elektronik eines Kraftfahrzeugs kommunizieren kann, **dadurch gekennzeichnet, dass** in der Speichereinheit mindestens ein benutzerspezifischer Datensatz zur automatischen Einstellung einzelner Fahrzeugkomponenten entsprechend den individuellen Anforderungen des Benutzers abspeicherbar ist.

2. Informationsträger (2) nach Anspruch 1, **dadurch gekennzeichnet, dass** in der Speichereinheit mehrere benutzerspezifische Datensätze zur automatischen Einstellung einer Fahrzeugkomponente abspeicherbar und wahlweise abrufbar sind.

3. Informationsträger (2) nach einem der Ansprüche 1 oder 2, **dadurch gekennzeichnet, dass** in der Speichereinheit mindestens ein benutzerspezifischer Datensatz zur automatischen Konfiguration eines im Fahrzeug befindlichen Displays abspeicherbar ist.

4. Informationsträger (2) nach einem der Ansprüche 1 bis 3, **dadurch gekennzeichnet, dass** er über eine Funkverbindung mit der Elektronik eines Kraftfahrzeugs kommunizieren kann.

5. Informationsträger (2) nach einem der Ansprüche 1 bis 4, **dadurch gekennzeichnet, dass** der Mikroprozessor so programmiert ist, dass sich mit Hilfe des Informationsträgers (2) eine Kommunikationsverbindung zwischen einer Mobilfunkeinheit (1) mit Leseschacht für den Informationsträger (2) und der Elektronik des Kraftfahrzeugs aufbauen lässt, wobei die Zugriffsberechtigung für einzelne Fahrzeugkomponenten von der Elektronik des Kraftfahrzeugs geprüft wird.

6. Informationsträger (2) nach Anspruch 5, **dadurch gekennzeichnet, dass** der Mikroprozessor so programmiert ist, dass der Aufbau der Kommunikationsverbindung zwischen der Mobilfunkeinheit (1) und der Elektronik des Kraftfahrzeugs nach dem Challenge/Response-Verfahren erfolgt.

7. Informationsträger (2) nach einem der Ansprüche 1 bis 6, **dadurch gekennzeichnet, dass** er in Form einer Smart Card (2) realisiert ist.

8. Verfahren zur Prüfung der Berechtigung für einen Fernzugriff auf einzelne Fahrzeugkomponenten über eine Mobilfunkeinheit (1) mit Hilfe eines Informationsträgers (2) nach einem der Ansprüche 5 bis 7, wobei die Mobilfunkeinheit (1) mit einem Leseschacht für den Informationsträger (2) ausgestattet ist, bei dem
- ein Challenge-Codewort vom Kraftfahrzeug an die Mobilfunkeinheit (1) gesendet wird und an den Informationsträger (2) im Leseschacht der Mobilfunkeinheit (1) weitergeleitet wird,
- der Informationsträger (2) den zum Challenge-Codewort gehörigen Identifikationscode berechnet und parallel dazu im Kraftfahrzeug ebenfalls der zum Challenge-Codewort gehörige Identifikationscode berechnet wird,
- die Mobilfunkeinheit (1) den vom Informationsträger (2) berechneten Identifikationscode an das Kraftfahrzeug zurücksendet,
- der vom Informationsträger (2) berechnete Identifikationscode mit dem im Kraftfahrzeug berechneten Identifikationscode verglichen wird und
- nur bei Übereinstimmung der beiden Identifikationscode der Fernzugriff auf einzelne Fahrzeugkomponenten über die Mobilfunkeinheit (1) freigegeben wird.

9. Kraftfahrzeug mit einer Elektronik, die so konfiguriert ist, dass sie mit einem Informationsträger nach einem der Ansprüche 1 bis 7 kommunizieren kann.
